# EUROPÄISCHE PATENTANMELDUNG

(11) **EP 1 094 418 A2**
(43) Veröffentlichungstag der Anmeldung: **25.04.2001**
(21) Anmeldenummer: 00203514.5
(22) Anmeldetag: 11.10.2000
(51) Int. Cl.: G06K 19/077

(54) **Chipkarte**

(30) Priorität: 20.10.1999 DE 19950524
(71) Anmelder: Philips Corporate Intellectual Property GmbH, 52064 Aachen (DE); Koninklijke Philips Electronics N.V., 5621 BA Eindhoven (NL)
(72) Erfinder: Giesler, Thomas, Dr., Philips Corp.Intel.Prop.GmbH, 52064 Aachen (DE)
(74) Vertreter: Volmer, Georg, Dipl.-Ing.

(57) **Zusammenfassung**

Beschrieben wird eine Chipkarte, vorzugsweise kontaktlose Chipkarte, mit einer Datenverarbeitungsschaltung zum Empfangen, Verarbeiten und/oder Senden von Datensignalen und wenigstens einem kapazitiven, mittels Berührung durch einen Benutzer betätigbaren Schalterelement, durch dessen Betätigung wenigstens das Senden von Datensignalen aus der Datenverarbeitungsschaltung freigegeben wird und ohne dessen Betätigung wenigstens das Senden von Datensignalen aus der Datenverarbeitungsschaltung unterbunden ist.

Diese Chipkarte ist so ausgestaltet, dass mit geringem Fertigungsaufwand eine Anordnung geschaffen wird, die ein zuverlässiges Aktivieren bzw. Deaktivieren der Chipkarte durch den Benutzer gewährleistet.

## Beschreibung

Die Erfindung bezieht sich auf eine Chipkarte, vorzugsweise auf eine kontaktlose Chipkarte.

Aus der DE 42 05 556 C2 ist eine Chipkarte mit elektronischen Elementen zum kontaktfreien Austausch von Daten mittels elektromagnetischer Wechselfelder mit einem externen Gerät bekannt In die Chipkarte sind ein oder mehrere manuell bedienbare Schalter eingebaut, welche es gestatten, die Elektronik oder Teile der Elektronik per manueller Bedienung ein- oder auszuschalten, um Daten und Kennungen der Chipkarte nur nach Wahl des Nutzers der Chipkarte auszugeben. Dadurch soll die unberechtigte Identifizierung der Chipkarte erschwert werden. Neben einer definitiven Sperrung der Chipkarte ist auch die Aktivierung derselben durch die Schalter in der Plastikkarte in Notsituationen möglich. Die Schalter, eingebettet in das Kartenmaterial, können als Kippschalter ausgeführt sein, indem zwei erkennbare Ausprägungen an der Oberfläche der Karte die Schaltstellung offenbaren.

Ein derartiger, mechanischer Schalter ist jedoch sehr aufwendig in der Herstellung und störanfällig im Betrieb.

Aus der internationalen Veröffentlichung WO 98/20450 ist eine Identifikationskarte mit Transaktionsspule und ein Verfahren zu deren Herstellung bekannt. Die Transaktionsspule ist in Form einer Silber- bzw. allgemein Leitpasten-Siebdruckausführung ausgebildet, die in einen den üblichen ISO-Normen entsprechenden Kunststoff-Kartenkörper eingebracht werden und deren Enden anschließend mittels Fräsprozess für die Implantation eines speziellen Chipmoduls freigelegt werden oder deren Kontaktenden bereits im Laminier- oder Spritzgussvorgang freigehalten worden sind und dessen Kontaktierung nur durch eine bewusste Druckaufbringung erfolgen kann und automatisch nach Beendigung dieses Druckaufbringens inaktiv wird.

Eine derartige, berührungslos funktionierende Identifikationskarte soll die Möglichkeit geben, den Vorgang der Identifikation und Transaktion von Daten bewusst herbeizuführen. Wesentlich ist dabei die bewusste Schaltung einer Transponderspule. Auch diese Identifikationskarte ist jedoch sehr aufwendig zu fertigen und im Betrieb störanfällig.

Aus der Druckschrift FR 2,728,710-A1 ist eine elektronische Karte mit einer manuell aktivierbaren Funktion bekannt. Diese elektronische Karte weist einen Kunststoffkörper auf, der die Funktionskomponenten umfasst, welche aus einer Batterie gespeist werden. Die Batterie ist mit einem Sensor verbunden, dessen physikalische Eigenschaften durch die manuelle Betätigung variieren. Eine elektronische Schaltung überwacht den Betrieb der Funktionskomponenten abhängig vom Zustand des Sensors. Als Sensor kann ein Dehnungsmessstreifen dienen, der auf eine Biegebeanspruchung der Karte reagiert, oder ein Thermistor, der durch die Wärme eines Fingers eines Benutzers, mit dem die Karte berührt wird, anspricht. Der Sensor kann auch Paare von Elektroden umfassen, zwischen denen sich der Widerstand bei Berührung durch den Benutzer verändert. Für eine sichere Betätigung soll außerdem eine Aktivierung des Funktionskomponenten nur dann erfolgen, wenn die Änderungsgeschwindigkeit der vom Sensor detektierten physikalischen Eigenschaft innerhalb eines vorgegebenen Wertebereichs liegt.

Es zeigt sich, dass derartige Sensoren unzuverlässig sind. So können die Ansprache eines Thermistors oder eines Thermoelements oder der Widerstand zwischen zwei Elektroden von der Fingertemperatur des Benutzers oder vom Tragen von Handschuhen abhängen.

Die Erfindung hat die Aufgabe, eine Chipkarte so auszugestalten, dass mit geringem Fertigungsaufwand eine Anordnung geschaffen wird, die ein zuverlässiges Aktivieren bzw. Deaktivieren der Chipkarte durch den Benutzer gewährleistet.

Erfindungsgemäß wird diese Aufgabe gelöst durch eine Chipkarte, vorzugsweise kontaktlose Chipkarte, mit einer Datenverarbeitungsschaltung zum Empfangen, Verarbeiten und/oder Senden von Datensignalen und wenigstens einem kapazitiven, mittels Berührung durch einen Benutzer betätigbaren Schalterelement, durch dessen Betätigung wenigstens das Senden von Datensignalen aus der Datenverarbeitungsschaltung freigegeben wird und ohne dessen Betätigung wenigstens das Senden von Datensignalen aus der Datenverarbeitungsschaltung unterbunden ist.

Durch die Ausbildung von kapazitiven Schalterelementen für die Aktivierung bzw. Deaktivierung der Chipkarte wird eine preiswerte, zuverlässige Schaltmöglichkeit geschaffen. Eine damit ausgebildete Chipkarte ist robust und somit für starke Beanspruchungen geeignet. Eine Fehlbetätigung durch beispielsweise Vergessen eines Schalters in einem unerwünschten Schaltzustand ist ausgeschlossen. Die erfindungsgemäß eingesetzten, kapazitiven Schalterelemente sind unempfindlich gegen Verschmutzung, Oxidation, Feuchtigkeit oder das Tragen von Handschuhen durch den Benutzer. Die erfindungsgemäß ausgestalteten, kapazitiven Schalterelemente sind mit nur geringem zusätzlichem Fertigungsaufwand bei minimalen Kosten herzustellen. Die erfindungsgemäß ausgestalteten Schalterelemente sind keinerlei mechanischer Abnutzung unterworfen. Eine unbeabsichtigte Betätigung ist ebenso ausgeschlossen wie ein unbeabsichtigtes Belassen in einem unerwünschten Schaltzustand. Die Bautiefe ist sehr gering und damit bevorzugt für Chipkarten geeignet. Die Herstellung kann im Rahmen ohnehin erforderlicher Fertigungsschritte der Karte vorgenommen werden. Es sind keinerlei zusätzliche Prozessschritte bei der Fertigung erforderlich. Der Schaltungsaufwand auf der Chipkarte wird allenfalls geringfügig erhöht.

Eine bevorzugte Weiterbildung der erfindungsgemäßen Chipkarte weist zwei kapazitive Schalterelemente auf die mit bezüglich ihrer Kapazitätswerte durch Berührung veränderbaren Leiterstrukturen ausgebildete Berührungszonen sowie eine zugehörige Auswerteschaltung zum Detektieren von Änderungen der Kapazitätswerte umfassen. Derartige Leiterstrukturen können einfach in gedruckter Leiterbahntechnik ausgeführt werden. Dabei müssen die Leiterstrukturen nicht ungeschützt an der Oberfläche der Chipkarte liegen, sondern können auch mit einem schmutzabweisenden und korrosions- bzw. zerstörungshemmenden Überzug versehen sein. Wird dagegen eine mechanisch ungeschützte Anordnung dieser Leiterstrukturen gewählt, ist ihre Funktionssicherheit durch Verschmutzungs- oder Korrosionsvorgänge nicht oder zumindest nicht unmittelbar beeinträchtigt. Die Leiterstrukturen können in der Chipkarte auch verdeckt angeordnet werden, so dass die beispielsweise grafische Gestaltung der Berührungszonen frei erfolgen kann.

Dadurch kann die Handhabung durch den Benutzer erleichtert werden.

Vorzugsweise umfassen die Leiterstrukturen je wenigstens zwei flächig ausgestaltete interdigital verflochtene Leiterkonfigurationen. Dabei sind vorzugsweise jeder der Leiterkonfigurationen eine Reihe streifenförmiger Leiterabschnitte zugeordnet, die miteinander leitend verbunden sind. Vorzugsweise liegen abwechselnd je ein Leiterabschnitt einer ersten Leiterkonfiguration und ein Leiterabschnitt einer zweiten Leiterkonfiguration im wesentlich parallel zueinander. Dadurch wird eine Erhöhung des Kapazitätswertes des kapazitiven Schalterelements erreicht und bei Berührung durch den Benutzer stellt sich eine größere Veränderung dieses Kapazitätswertes ein. Dies erleichtert die betriebssichere Detektion eines Bedienungsvorgangs.

In jeder der vorbeschriebenen Leiterstrukturen bildet je eine erste der Leiterkonfigurationen eine Erregungselektrode und bildet die zugeordnete zweite der Leiterkonfigurationen der betreffenden Leiterstruktur eine Messelektrode. Jede der Erregungselektroden der beiden kapazitiven Schalterelemente ist mit einem der Anschlüsse einer auf der Chipkarte angeordneten, zur Übertragung der Datensignale auf drahtlosem Wege dienenden Antennenspule verbunden. Somit werden die Erregungselektroden durch das von der Antennenspule erzeugte bzw. empfangene elektromagnetische Feld unmittelbar gespeist. Über die durch die Leiterstrukturen gebildeten Kapazitäten werden die Messelektroden der Schalterelemente mit einer entsprechenden Wechselspannung beaufschlagt, die in einfacher Weise detektiert und verarbeitet werden kann. Durch Berühren der Leiterstrukturen in den Berührungszonen kann wahlweise eine der Leitesstrukturen in ihrem Kapazitätswert verändert werden. Auch diese Veränderung ist einfach detektierbar und führt zu einer entsprechenden Erkennung der Berührung und damit des vom Benutzer durch diese Berührung gegebenen Befehls. Darüber hinaus sind auch Kombinationen von Berührungen der Berührungszonen denkbar. Für die genannten Auswertungen sind die Messelektroden mit der Auswerteschaltung gekoppelt.

In einer anderen Fortbildung der Erfindung sind die Messelektroden von einer gemeinsamen, beide Berührungszonen übergreifenden, die entsprechenden Leiterkonfigurationen umfassenden Leiteranordnung gebildet. Durch eine solche Leiteranordnung wird die Ausgestaltung der Messelektroden als gemeinsames Leitergebilde und damit der Herstellungsprozess für die Chipkarte vereinfacht.

Zur erleichterten Fertigung einer Chipkarte der erfindungsgemäßen Art ist das Schalterelement bzw. sind die Schalterelemente mit der Datenverarbeitungsschaltung auf einem gemeinsamen Trägerelement angeordnet. Vorzugsweise umfasst die Anordnung auf diesem gemeinsamen Trägerelement auch Anschlüsse für die vorgenannte Antennenspule. Das Trägerelement mit den darauf angeordneten Elementen kann dann als Modul vorgefertigt werden, welches in einem abschließenden Fertigungsschritt mit der Antennenspule und gegebenenfalls weiteren Bauteilen der Chipkarte im Kartenkörper zusammengesetzt, beispielsweise verschweißt wird.

Ausführungsbeispiele der Erfindung sind in der Zeichnung dargestellt und werden im nachfolgenden näher beschrieben. Dabei zeigen
Fig. 1 ein Prinzipschaltbild einer erfindungsgemäßen Chipkarte,
Fig. 2 ein Schaltbild zur Darstellung der Funktionsweise der Schalterelemente der erfindungsgemäßen Chipkarte,
Fig. 3 bis 5 Ausführungsbeispiele für die Gestaltung der Leiterstrukturen auf einer erfindungsgemäßen Chipkarte.

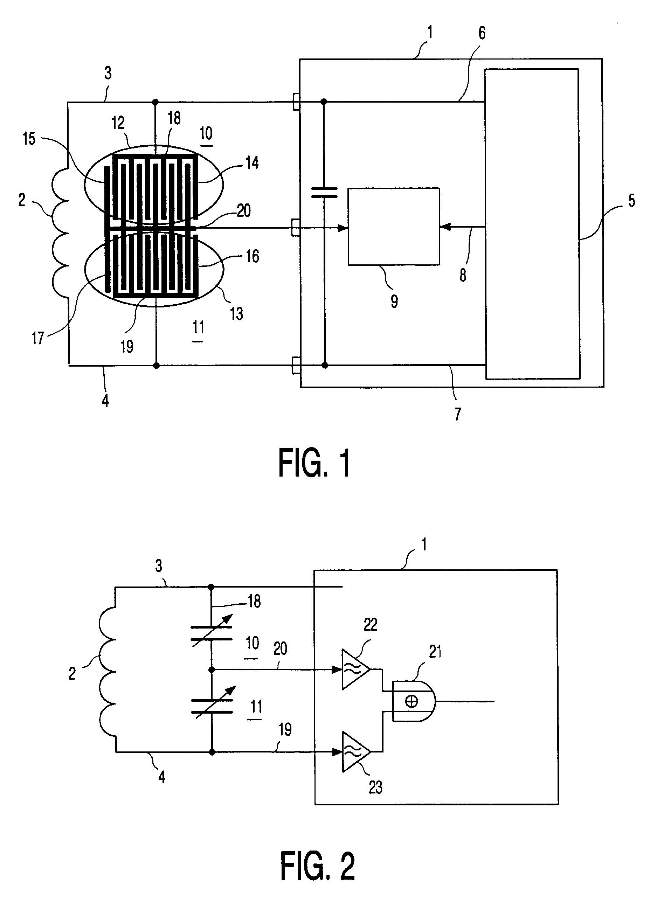

In der Schaltungsanordnung nach Fig. 1, die den blockschematischen Aufbau eines Ausführungsbeispiels einer elektronischen Einrichtung einer Chipkarte, vorzugsweise einer Smartcard, darstellt, ist mit dem Bezugszeichen 1 eine Datenverarbeitungsschaltung gekennzeichnet, die zum Empfangen, Verarbeiten und/oder Senden von Datensignalen auf kontaktlosem Wege über eine Antennenspule 2 eingerichtet ist. Dazu ist die Antennenspule 2 mit zwei Anschlüssen 3, 4 mit der Datenverarbeitungsschaltung 1 verbunden. Die Datenverarbeitungsschaltung 1 umfasst in einem Block 5 außer den an sich bekannten Einrichtungen zum Empfangen, Verarbeiten und/oder Senden der Datensignale auch eine Energieversorgung und eine Taktaufbereitung. Sie ist über Anschlüsse 6, 7 mit den Anschlüssen 3 bzw. 4 der Antennenspule 2 verbunden. Ein weiterer Anschluss 8 des Blocks 5 zur Abgabe eines Taktsignals ist mit einer Auswerteschaltung 9 verbunden.
Die elektronische Schaltung der Chipkarte gemäß dem Ausführungsbeispiel nach Fig. 1 umfasst zwei kapazitive Schalterelemente, zu denen außer der Auswerteschaltung 9 zwei Leiterstrukturen 10, 11 gehören. Jede der Leiterstrukturen 10, 11 ist wenigstens weitgehend innerhalb einer zugeordneten Berührungszone 12 bzw. 13 angeordnet. Jede der Leiterstrukturen 10, 11 umfasst zwei flächig ausgestaltete, interdigital verflochtene Leiterkonfigurationen 14, 15 bzw. 16, 17. Jede der Leiterkonfigurationen 14 bis 17 besteht aus streifenförmigen Leiterabschnitten, die mit gemeinsamen Anschlüssen 18, 19 bzw. 20 leitend zur jeweiligen Leiterkonfiguration verbunden sind. Dabei bildet die Leiterkonfiguration 14, die mit ihrem gemeinsamen Anschluss 18 mit dem Anschluss 3 der Antennenspule 2 verbunden ist, eine Erregungselektrode innerhalb der Berührungszone 12. Entsprechend bildet die Leiterkonfiguration 16 innerhalb der Berührungszone 13 mit ihrem gemeinsamen, an den Anschluss 4 der Antennenspule 2 geführten Anschluss 19 eine Erregungselektrode zu der genannten Berührungszone 13. Die Leiterkonfigurationen 15, 17 bilden zu den entsprechenden Berührungszonen 12 bzw. 13 Messelektroden der zugehörigen Leiterstrukturen. In Fig. 1 sind außerdem die Messelektroden 15, 17 von einer gemeinsamen, beide Berührungszonen übergreifenden Leiteranordnung gebildet. Deren gemeinsamer Anschluss 20 ist mit der Auswerteschaltung 9 gekoppelt.

Die Auswerteschaltung 9 umfasst beispielsweise eine Detektionsanordnung zum Detektieren eines Minimums der Amplitude eines über den gemeinsamen Anschluss 20 zugeführten Signals sowie einen Phasenkomparator. Im Betrieb der Schaltungsanordnung nach Fig. 1 werden die Schalterelemente von der Antennenspule 2 mit einer hochfrequenten Wechselspannung beaufschlagt. Die Leiterkonfigurationen 14, 15 bzw. 16, 17 weisen die Funktion von Kapazitäten auf, sie bilden einen kapazitiven Spannungsteiler, dessen Anzapfung der gemeinsame Anschluss 20 bildet. Die an diesem gemeinsamen Anschluss 20 im Betrieb abgegriffene Wechselspannung wird der Auswerteschaltung 9 zugeleitet.

Zur Erläuterung der Funktionsweise des beschriebenen kapazitiven Teilers sind in Fig. 2 die dafür benutzten Bauelemente als Prinzipschaltbild dargestellt, die Leiterstrukturen 10, 11 bilden zwei durch Berührung der Berührungszonen 12 bzw. 13 veränderbare Kapazitäten. Die Veränderung der Kapazitätswerte wird durch die Veränderung der Dielektrizitätskonstanten erreicht, die eintritt, wenn ein Benutzer beispielsweise mit seinem Finger die entsprechende Berührungszone 12 bzw. 13 antippt. Dadurch erhöht sich die Amplitude des Signals am gemeinsamen Anschluss 20 der Leiterstukturen 10, 11. Auch die Phasenlage dieses Signals verändert sich, und zwar in Abhängigkeit davon, welche der beiden Berührungszonen 12, 13 berührt, d.h. welche der Leiterstrukturen 10 bzw. 11 in ihrem Kapazitätswert verändert wird. Dem durch die Leiterstrukturen 10, 11 gebildeten kapazitiven Spannungsteiler ist eine Schaltungsanordnung nachgeordnet, die von der Auswerteschaltung 9 umfasst wird und zur Detektion der Amplitudenänderung wie auch der Phasenänderung des Signals am gemeinsamen Anschluss 20 dient. Fig. 2 zeigt ein einfaches Ausführungsbeispiel für einen Phasendetektor, der mit einem Exclusiv-Oder-Gatter 21 aufgebaut ist. In Fig. 2 wird dieses Exclusiv-Oder-Gatter mit seinen Eingangsanschlüssen über je einen Wechselspannungsverstärker 22, 23 an die gemeinsamen Anschlüsse 20 bzw. 19 geführt. Am Ausgangsanschluss des Exclusiv-Oder-Gatters 21 kann dann eine Phaseninformation und damit eine Information darüber abgerufen werden, welche der Berührungszonen 12 bzw. 13 vom Benutzer ausgewählt, d.h. berührt worden ist. Jede der Berührungszonen 12 bzw. 13 ist, wie vorstehend ausgeführt, graphisch hervorhebbar, beispielsweise mit verschiedenfarbigen Markierungen oder Textmarkierungen.

Wahlweise kann anstelle einer Phasendetektion in der Auswerteschaltung 9 auch ausschließlich eine Amplitudendetektion erfolgen. Dies ist ausreichend, wenn lediglich eine Berührung einer der Berührungszonen 12 bzw. 13 als solche detektiert werden soll und keine Unterscheidung vorzunehmen ist. In diesem Fall kann auch eine der Berührungszonen 12 bzw. 13 entfallen oder durch einen Kondensator mit festem Kapazitätswert ersetzt werden.

Bei der Dimensionierung der Leiterstrukturen 10, 11 ist darauf zu achten, dass durch eine Berührung der Berührungszonen 12, 13 die Kapazitätswerte der Leiterstrukturen 10 bzw. 11 nicht so stark Einfluss nehmen, dass ein für das Empfangen bzw. Senden von Datensignalen auf der Chipkarte eingerichteter Resonanzkreis in unerwünschter Weise verstimmt wird.

Durch die beschriebene Anordnung wird für die Datenverarbeitungsschaltung 1 lediglich ein zusätzlicher Anschluss benötigt, der an den gemeinsamen Anschluss 20 zur Verbindung mit der Auswerteschaltung 9 angeschlossen ist. Dies erleichtert die Konstruktion einer integrierten Schaltungsanordnung, in der die Datenverarbeitungsschaltung 1 aufgenommen ist.

Mit der Chipkarte gemäß Fig. 1 ist eine sehr einfache und eingängige Handhabung möglich, mit der auch eine Menüführung stattfinden kann. Die Chipkarte kann dabei in der Hand gehalten werden, die Berührung der Berührungszonen 12 bzw. 13 erfolgt bevorzugt mit dem Daumen derselben Hand. Über die Übertragung der Datensignale zwischen der Chipkarte und einem Lesegerät kann ein auf dem Lesegerät laufendes Bedienungsprogramm über die erfindungsgemäße Chipkarte menügeführt werden. Innerhalb solcher menügeführten Programmabläufe können zusätzliche Sicherheitsmechanismen gegen Fehlbedienungen eingesetzt werden.

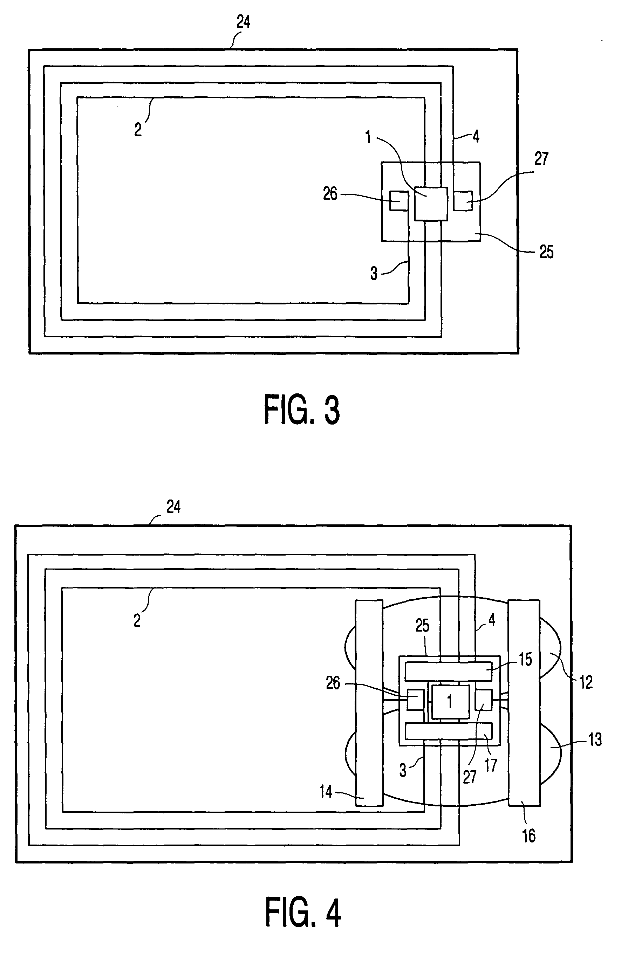

Fig. 3 zeigt schematisch den Kartenkörper 24 einer erfindungsgemäßen Chipkarte mit der Anrennenspule 2, die im gezeigten Beispiel drei Windungen aufweist, deren Enden - die Anschlüsse 3 bzw. 4- auf einem gemeinsamen Trägerelement 25 durch zwei Anschlussflächen 26 bzw. 27 elektrisch angeschlossen sind. Insbesondere, in Fig. 3 nicht im Detail dargestellt, kann die Antennenspule 2 mit eigenen, mit den Anschlussflächen 26, 27 nach Montage deckungsgleich angeordneten Anschlussflächen ausgestattet sein, die unmittelbar auf dem Kartenkörper 24 angeordnet sind und bevorzugt im selben Herstellungsschritt gemeinsam mit den Anschlüssen 3,4 und dem Leiter der Windungen der Antennenspule 2 hergestellt werden. Wird das Trägerelement 25 auf dem Kartenkörper 24 placiert, erfolgt dies in der Weise, dass die Anschlussflächen 26, 27 auf dem Trägerelement 25 mit den genannten Anschlussflächen, die mit den Anschlüssen 3 bzw. 4 verbunden sind, deckungsgleich justiert werden. Die Verbindung der Anschlussflächen der Anschlüsse 3 bzw. 4 mit den Anschlussflächen 26, 27 des Trägerelements 25 erfolgt dann beispielsweise in einem Lötvorgang.

Auf dem Trägerelement 25 ist außerdem die Datenverarbeitungsschaltung 1 angeordnet, die auch die Auswerteschaltung 9 umfasst und die durch auf dem Trägerelement 25 angeordnete Leiter mit den Anschlussflächen 26, 27 des Trägerelements 25 verbunden sind. Auf diese Weise können das bestückte Trägerelement 25 einerseits und der Kartenkörper 24 mit der Antennenspule 2 und deren Anschlussflächen andererseits als Baugruppen gesondert gefertigt, montiert und anschließend beispielsweise gemeinsam in Schutzfolie eingeschweißt werden.

Um nun bei einer derartigen Standardkonfiguration für eine kontaktlose Chipkarte die erfindungsgemäßen Leiterkonfigurationen für die Schalterelemente mit möglichst geringem Zusatzaufwand anzuordnen, wird beispielsweise eine Anordnung gemäß Fig. 4 gewählt. Darin sind mit der Anordnung nach Fig. 3 übereinstimmende Elemente wieder mit denselben Bezugszeichen versehen. Zusätzlich zu der Antennenspule 2 mit ihren Anschlüssen 3, 4 sind auf dem Kartenkörper 24 die beiden Erregungselektroden 14 bzw. 16 angeordnet. Dies geschieht im selben Fertigungsschritt wie die Anordnung der Antennenspule 2 mit ihren Anschlüssen 3, 4. Auf dem Trägerelement 25 sind andererseits die Messelektroden 15, 17 im selben Fertigungsschritt wie die Herstellung der Anschlussflächen 26, 27 aufgebracht worden. Dies geschieht gemeinsam mit der Herstellung des gemeinsamen Anschlusses 20. Bei der Montage der Datenverarbeitungsschaltung 1 (integrierter Schaltkreis) auf dem Trägerelement 25 wird dann auch die Verbindung zwischen der Auswerteschaltung 9 und dem gemeinsamen Anschluss 20 hergestellt. Das Trägerelement 25 kann dann in gleicher Weise wie bei der herkömmlichen Chipkarte gemäß Fig. 3 auf dem Kartenkörper 24 montiert werden. Durch diese einfache Anordnung wird außerdem die mechanische Beanspruchbarkeit des Kartenkörpers 24 erhalten, die bei einer Erhöhung der Anzahl der Anschlussflächen sinken würde.

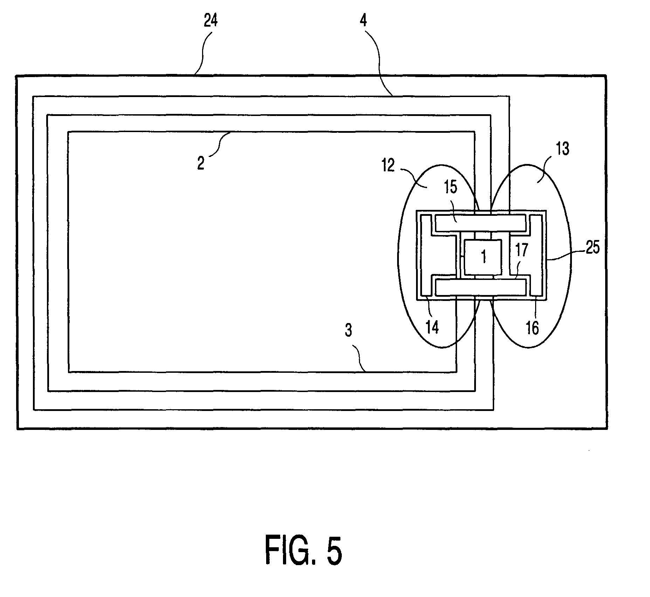

In einer anderen Ausführungsform gemäß Fig. 5 sind sowohl die Erregungselektroden 14, 16 als auch die Messelektroden 15, 17 gemeinsam auf dem Trägerelement 25 angeordnet. Dies vereinfacht die Leiteranordnung auf dem Kartenkörper 24, wodurch weitere Vereinfachungen im Fertigungsverlauf bewirkt werden können. Insbesondere kann der Kartenkörper 24 für herkömmliche und erfindungsgemäße Chipkarten einheitlich gefertigt werden. Auch die Verbindungen zwischen dem Trägerelement 25 und dem Kartenkörper 24 sind gegenüber einer herkömmlichen Chipkarte ohne Schalterdemente unverändert.

Die Wirkung der Erregungselektroden 14, 16 wird bei den vorstehend beschriebenen Anordnungen durch eine Streukapazität der Windungen der Antennenspule 2 noch erhöht.
Mit der erfindungsgemäß ausgestalteten Chipkarte wird der Vorteil einer sehr einfachen Herstellbarkeit erzielt. Die erfindungsgemäß ausgestalteten Schalterelemente sind mechanisch robust und für eine lange Betriebsdauer geeignet, da keine beweglichen Teile wie beispielsweise mechanische Schalter erforderlich sind. Die Betriebssicherheit, auch bei Betätigung mit Handschuhen, ist hoch. Unerwünschte Betätigung kann leicht durch die Ausgestaltung spezieller Programmabläufe unterbunden werden. Die erfindungsgemäßen Schalterelemente erhöhen nicht die Dicke des Kartenkörpers. Die für die Herstellung der erfindungsgemäßen Schalterelemente auf der Chipkarte erforderlichen Fertigungsschritte sind mit den ohnehin erforderlichen Fertigungsschritten vereinbar und können in deren Rahmen ohne Zusatzaufwand durchgeführt werden; insbesondere ist eine Fertigung mit denselben Fertigungsschritten möglich. Zusätzliche Komponenten außerhalb der Datenverarbeitungsschaltung sind nicht erforderlich. Dadurch wird eine sehr preiswerte Fertigung erreicht. Die Handhabung kann sehr einfach und eingängig mit einer Hand erfolgen und ermöglicht eine drahtlose, menügeführte Kommunikation mit einem Lesegerät. Überdies ist auch ein Einsatz für sogenannte Kombikarten, d.h. Chipkarten mit kontaktloser wie auch kontaktbehafteter Übertragung, möglich.

## Patentansprüche

1. Chipkarte, vorzugsweise kontaktlose Chipkarte, mit einer Datenverarbeitungsschaltung zum Empfangen, Verarbeiten und/oder Senden von Datensignalen und wenigstens einem kapazitiven, mittels Berührung durch einen Benutzer betätigbaren Schalterelement, durch dessen Betätigung wenigstens das Senden von Datensignalen aus der Datenverarbeitungsschaltung freigegeben wird und ohne dessen Betätigung wenigstens das Senden von Datensignalen aus der Datenverarbeitungsschaltung unterbunden ist.

2. Chipkarte nach Anspruch 1,
gekennzeichnet durch
zwei kapazitive Schalterelemente, die mit bezüglich ihrer Kapazitätswerte durch Berührung veränderbaren Leiterstrukturen ausgebildete Berührungszonen sowie eine zugehörige Auswerteschaltung zum Detektieren von Änderungen der Kapazitätswerte umfassen.

3. Chipkarte nach Anspruch 2,
dadurch gekennzeichnet,
dass die Leiterstrukturen je wenigstens zwei flächig ausgestaltete, interdigital verflochtene Leiterkonfigurationen umfassen.

4. Chipkarte nach Anspruch 3,
dadurch gekennzeichnet,
dass je eine erste der Leiterkonfigurationen jeder der Leiterstrukturen eine Erregungselektrode und die zweite der Leiterkonfigurationen jeder Leiterstruktur eine Messelektrode bilden, und dass jede der Erregungselektroden mit einem Anschluss einer auf der Chipkarte angeordneten, zur Übertragung der Datensignale dienenden Antennenspule verbunden ist.

5. Chipkarte nach Anspruch 4,
dadurch gekennzeichnet,
dass die Messelektroden mit der Auswerteschaltung gekoppelt sind.

6. Chipkarte nach Anspruch 4 oder 5,
dadurch gekennzeichnet,
dass die Messelektroden von einer gemeinsamen, beide Berührungszonen übergreifenden, die entsprechenden Leiterkonfigurationen umfassenden Leiteranordnung gebildet sind.

7. Chipkarte nach einem der vorhergehenden Ansprüche,
dadurch gekennzeichnet,
dass das bzw. die Schalterelement(e) mit der Datenverarbeitungsschaltung auf einem gemeinsamen Trägerelement angeordnet ist (sind).
